# EUROPEAN PATENT SPECIFICATION

(11) **EP 2 821 714 B1**
(45) Date of publication and mention of the grant of the patent: **12.07.2017**
(21) Application number: 14397521.7
(22) Date of filing: 13.06.2014
(51) Int. Cl.: F24D 11/02

(54) **Apparatus for heating a building**
Vorrichtung zum Heizen eines Gebäudes
Appareil de chauffage d'un bâtiment

(30) Priority: 05.07.2013 FI 20134160 U
(43) Date of publication of application: 07.01.2015
(73) Proprietor: Neuvonen, Mikko, 53500 Lappeenranta (FI)
(72) Inventor: Neuvonen, Mikko, 53500 Lappeenranta (FI)
(74) Representative: Berggren Oy, Tampere

(56) References cited:
- EP-A1- 2 322 880
- AT-B- 413 302
- DE-U1- 8 529 355
- US-A- 4 375 831

## Description

### Field of the invention

The present invention relates to a heating system for a building, comprising at least a first heat recovery apparatus for recovering heat from a first heat source and a second heat recovery apparatus for recovering heat from a second heat source. The invention also relates to a method in which heat is recovered from a first heat source by a first heat recovery apparatus and from a second heat source by a second heat recovery apparatus.

### Background of the invention

A large number of solutions have been recently developed for reducing energy consumption in buildings. Attempts have been made to recover heat from e.g. exhaust air and to increase the application of geothermal heating, heat from outside air and solar heat in the heating of buildings. For example, solar thermal collectors are known, in which a liquid medium is circulated to be heated by solar radiation. Thus, thermal energy transferred from solar radiation to the medium can be transferred to a heating liquid circulating in the heating system of a building, for example by means of a heat exchanger. This may reduce the amount of energy otherwise needed for heating the heating liquid, whereby the consumption of oil, wood, pellets, and/or electricity can be reduced to some extent. A heating solution that has recently aroused more interest is the utilization of geothermal energy, for example by means of heat pumps. In such a system, liquid medium is circulated in pipe assemblies embedded in the ground in the vicinity of a building. This medium is heated by the heat energy stored in the ground, so that this heat energy can be transferred by a heat pump to the heating system of the building.

The use of only one system of the above mentioned kind does not necessarily guarantee sufficient or desired energy efficiency, wherein the aim may be to utilize more than one system in the same building. However, these are typically separate systems, which increases the total costs of the apparatus, the amount of work needed for the installation, and the service costs. Moreover, it may be difficult or even impossible to combine different systems. One reason for this has been the fact that in systems utilizing geothermal energy, the temperature of the medium is considerably lower than in solar thermal collectors.

In exhaust air systems, one heat exchanger is typically used for transferring thermal energy from exhaust air to a medium (refrigerant). From the medium, the thermal energy is transferred by means of a compressor to another heat exchanger for transferring thermal energy to e.g. water. Thus, at least two different media are needed, which increases the complexity and costs of the system. Typically, the efficiency decreases as well, because in each heat exchanger, part of the energy recovered remains unexploited and the total pressure loss of the energy transferring medium (e.g. water or mixture of water and glycol) increases, which may, for example, increase the energy consumption of a solution pump.

US 4,375,831 discloses an indoor space environment heating and cooling system in which a massive thermal storage unit is interposed between a geothermal heat energy storage capacity -the earth- and a heat pump heating and/or cooling apparatus for controlling and maintaining the environment in an indoor living space. A fluid circulation apparatus is provided to circulate a working fluid from the massive thermal storage unit directly to a heat exchanger in the indoor space environment conditioning apparatus, to provide cooling when the temperature of the thermal storage unit is less than the temperature in the living space. Only one source of thermal energy is used in heating the building.

AT 413 302 discloses an arrangement which has at least two of three environmental heat sources, such as an air collector, terrestrial heat exchanger and solar absorber connected in series and each bridged by a bypass line controlled by a changeover valve. The valve allows flow through the air collector if the temperature of the thermal medium upstream of the valve is lower than the ambient air temperature.

EP 2 322 880 discloses a heating pump system which has environmental heat sources cycle, in which an environmental heat source is integrated as heat source. Evaporators of a heat pump are connected with the environmental heat sources cycle. The heat pump separates two refrigerant cycles from each other in a structural manner. An independent claim is also included for a building with multiple housing units and brine circuits.

DE 85 29 355 discloses a heat exchanger for recovering heat from combustion gases. The heat exchanger comprises a conduit arranged around a pipe. The heat exchanger also comprises a housing wherein two canals for combustion gases are formed. The heat exchanger utilizes vertical channels for removing condensed water from the heat exchanger.

### Brief summary of the invention

It is an aim of the present invention to provide a method and an apparatus for improving the energy efficiency of buildings in view of the state of the art. The present invention is based on the idea that the same medium is utilized in different heat recovery apparatuses, and this same medium is circulated between the different heat recovery apparatuses.

The system according to an embodiment of the present invention for heating a building is primarily characterized by claim 1.

The method according to an embodiment of the present invention is primarily characterized by claim 7.

In an advantageous embodiment of the invention, said at least two heat transfer steps comprise one or more solar thermal collectors, an apparatus for recovering geothermal energy, and/or an apparatus for recovering heat from exhaust air.

Other advantageous embodiments of the invention are presented in the appended dependent claims.

The present invention shows remarkable advantages over solutions of prior art. When applying the invention, some of the solution pumps and the like can be omitted. Furthermore, the number of heat exchange surfaces (heat exchangers) can be reduced, and energy intake from the solution pump in the solution circuit, energy losses (wasted energy) in the flow pipe assemblies, deaeration problems, algal growth problems, and pipe assembly placement problems which are present in solutions of prior art, are avoided at least in part.

### Description of the drawings

In the following, the present invention will be described in more detail with reference to the appended drawings, in which
- Fig. 1: shows a principle view of a system according to an advantageous embodiment of the invention, installed in an apartment house,
- Figs. 2a and 2b: show some details with respect to a solar collector in the system of Fig. 1,
- Fig. 3: shows a detail with respect to the recovery of exhaust air in the system of Fig. 1,
- Fig. 4: shows a principle view of a heat exchanger cell assembly for the recovery of heat from exhaust air in the system of Fig. 3,
- Fig. 5: shows a temperature curve with respect to the heat exchanger cell assembly for an air source heat pump according to Fig. 4,
- Figs. 6a to 6d: show some other principle views of systems according to the invention, installed in an apartment house,
- Fig. 7: shows yet another embodiment in which e.g. district heating is used as one source of thermal energy, and
- Fig. 8: shows yet another embodiment in which heat is also recovered from e.g. waste water.

### Detailed description of the invention

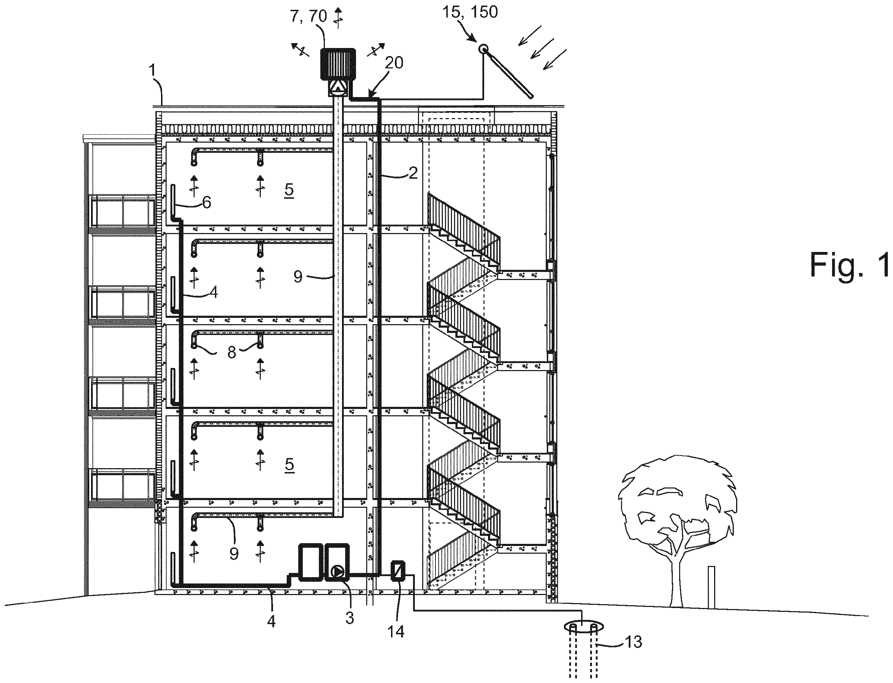

Figure 1 shows a principle view of a system according to an advantageous embodiment of the invention installed in a building 1, such as an apartment house. The system comprises a medium flow pipe assembly 2 arranged in a flow connection with a heat pump 3. In the heat pump 3, the temperature is elevated and the heat level of thermal energy is raised, and energy is transferred from the medium to a heating medium and, directly by the medium, thermal energy is transferred for heating of circulating air and/or supply air. The heating medium can be circulated in the heating pipe assembly 4 for heating different rooms in the building. The heating pipe assembly 4 is arranged to circulate through radiators or corresponding heating elements 6 in the different rooms 5. In these heating elements 6, thermal energy transferred to the heating medium is discharged to the rooms 5 in a way known as such, for example in the form of thermal radiation to indoor air and/or by conduction to the structures. If a heating pipe assembly placed under the surface material of the floor is used as the heating elements 6, heat can be conducted from the heating elements 6 to the surface material of the floor.

In some embodiments, the heat pump 3 can also be used for heating supply water, or a separate heat pump can be provided for bringing the temperature of the supply water to a sufficiently high level. A separate heat pump may be needed in situations in which the temperature of the supply water differs significantly from the temperature of the heating medium circulating in the heating pipe assembly 4.

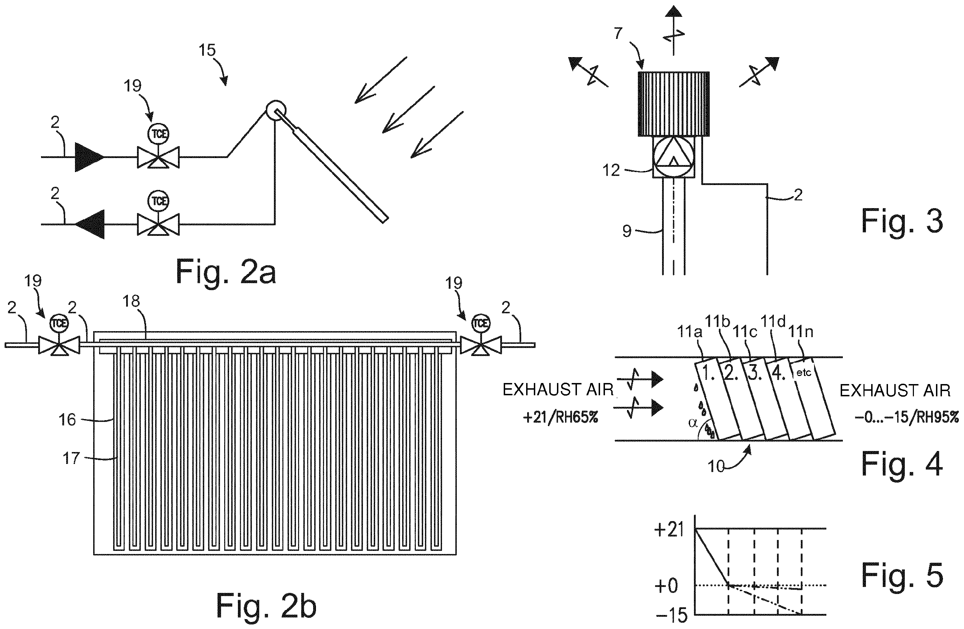

The medium flow pipe assembly 2 is also arranged in a flow connection with an apparatus 7 for recovering heat from exhaust air (Fig. 3). The different rooms 5 of the building are normally provided with one or more exhaust air valves 8, through which exhaust air can be conveyed from the rooms to exhaust air ducts 9. The exhaust air ducts 9 are in flow connection with the apparatus 7 for recovering heat from exhaust air, wherein thermal energy can be recovered from exhaust air. This is performed advantageously by a heat exchanger cell assembly 10 in the apparatus 7 for recovering heat from exhaust air. In an advantageous embodiment of the invention, the heat exchanger cell assembly 10 is a multi-cell assembly; that is, the heat exchanger cell assembly 10 comprises two or more cells 11 a, 11 b, ... 11 n (Fig. 4). In these cells 11 a, 11 b, ... 11 n heat is recovered from exhaust air. Consequently, heat is recovered in multiple steps. Figure 4 shows a principle view of a heat exchanger cell assembly 10 according to an advantageous embodiment of the invention. The principle of operation of this heat exchanger cell assembly 10 will be described further below in this application.

The apparatus 7 for recovering heat from exhaust air may also comprise an air blower 12 for generating an underpressure in the exhaust air ducts 9. Thus, air will flow from the rooms into the exhaust air ducts 9 and further through the heat exchanger cell assembly 10. Exhaust air, from which heat has been recovered, can be discharged from the heat exchanger cell assembly 10 to e.g. atmospheric air in a way known as such.

The system according to Fig. 1 also comprises an arrangement, by which thermal energy stored in the ground can be utilized for heating the building 1. The arrangement comprises a second heat recovery pipe assembly 13 placed in the ground, for example in a bore well drilled in the ground, or around the building close to the ground surface, for example at the depth of about 1 to 2 m. Moreover, in some embodiments, it can be used for recovering heat from a waste heat source, for example from a process, from waste water, *etc.* In the heat recovery pipe assembly 13, a medium is circulated by, for example, a solution pump/geothermal heat pump 14, wherein the medium is heated to some extent by thermal energy stored in the ground. In the solution pump/geothermal heat pump 14, this thermal energy is transferred to the medium circulated in the medium flow pipe assembly 2. The system can be controlled to take in energy where it is available at lowest cost; for example, when the outdoor temperature drops, the ground solution circulation can also be turned on in parallel with the exhaust air.

The system of Fig. 1 also comprises a solar collector apparatus 15 by which solar radiation heat energy can be utilized for the heating of the building 1 and/or for the heating of supply water. Figures 2a and 2b show a solar collector apparatus 15 in a reduced principle view. The solar collector apparatus 15 operates, for example, by the principle of a vacuum tube collector, whereby the solar collector apparatus 15 comprises vacuum tubes 16 accommodating the actual heat recovery pipe 17. The vacuum tubes 16 are provided with a vacuum or almost a vacuum, which reduces heat losses. The heat recovery pipes 17 contain a heat recovery fluid which is thus heated by solar radiation heat. This heated heat recovery fluid heats a collector 18 at the top end of the heat recovery pipe, wherein the medium in the collector 18 is heated. This collector 18 is in a flow connection with the medium flow pipe assembly 2; in other words, the same medium flows in the collector 18 as in the medium flow pipe assembly 2. The circulation of the medium in the collector 18 is thus produced simultaneously with the circulation of the medium in the medium flow pipe assembly 2.

Now, as the collector 18 of the solar collector in the system according to the present invention is directly connected to the flow pipe assembly, without a separate heat exchanger, it is possible to recover solar energy even at temperatures of about +15°C, without auxiliary solutions and pumps with accumulators. Thus, the vacuum collector is connected to the medium circulation in such a way that it only comprises one heat exchange surface which, in this example, is the heat exchange surface between the heat recovery pipe 17 and the collector 18. In this way, it is possible to recover and transfer energy at the low temperatures of the solar cell, and to raise the temperature by a compressor to a utilizable level, for example +55°C.

The system can also comprise valves 19 or other corresponding flow control devices for controlling or even preventing, if necessary, the flow and/or the suction pressure of the medium in different parts of the system. For example in a situation, in which the outdoor air temperature is very low and the weather is cloudy so that the clouds largely prevent solar radiation heat from entering the solar collector 15, the circulation of the medium in the solar collector 15 can be prevented. Also, in a situation in which it is not necessary to heat the building, the circulation of the medium can be limited in such a way that heating energy is only collected for heating hot supply water and/or for keeping it hot.

We shall still describe the structure of an apparatus 7 for recovering heat from exhaust air. The structure of the apparatus 7 for recovering heat from exhaust air is a multilayer cell assembly. Thus, the first cell 11 a recovers heat from exhaust air at room temperature and at temperatures slightly lower than this, preferably above 0°C (from +21°C to 0°C). At this stage, a large content of airborne water condensates on the surface of the cell assembly. The second cell 11 b is arranged to operate at temperatures slightly below zero, from ±0°C to -5°C, and the third cell 11 c is arranged to operate at even lower temperatures, such as from -5°C to -15°C. If there are still more cells, the operating temperature range of the next cells is always set below the temperature range of the preceding cell. In this way, the freezing of airborne water on the cell assembly is minimized by removing most of the water in the first cell 11 a. Cell assemblies which become so cold that the cell assembly will gradually frost, can be subjected at intervals to hot-gas defrosting which is an efficient and quick way to defrost the surfaces of the lamellae on the cells.

Figure 5 illustrates a drop in the temperature of exhaust air when passing through the heat recovery apparatus 7. The curve of Fig. 5 shows that the temperature of air exiting the heat recovery apparatus 7 may drop as low as below freezing even if it were in the room temperature range when entering the heat recovery apparatus 7.

It should be mentioned that the above presented temperature ranges for the different cells are only some examples, but in applications in practice, these temperature ranges may deviate from those presented above. However, the principle is that the operating temperature range of a subsequent cell in the flow direction of exhaust air is set lower than that of the preceding cell. Thus, each cell can be designed to operate efficiently in the operating temperature range designed for the respective cell.

In the cell assembly 10 of the apparatus 7 for recovering heat from exhaust air belonging to a system according to the invention, at least the first cell 11 a is arranged to be installed in an oblique position so that the surfaces of the lamellae form an angle α to the horizontal direction. This angle α is thus greater than 0° but smaller than 90°. An advantageous angle is about 30°. As a result of this oblique position, moisture from the exhaust air is condensed on the surfaces of the lamellae in the cell, and this condensing water can flow down on the surface of the lamella and, at the edge of the lamella, drop off the surface of the lamella. Thus, the lamellae of the first cell efficiently decrease the moisture content of exhaust air, whereby less moisture is condensed on the other cells. As the temperature of exhaust air decreases when passing through the cells, the risk of freezing of the exhaust air would increase unless its moisture content could be reduced. Thus, frost is not so easily formed by the drier air on the surfaces of the lamellae, so that the need for defrosting of the different cells is decreased. By controlled adjustment (e.g. with suction pressure) of the cell assembly, the dew point can be provided on the surface of the cell assembly, so that the drops of water condensing on the surface of the cell assembly bind/remove impurities from the exhaust air. The cell assembly is coated with e.g. a nano coating which may enhance the drops of water in removing impurities.

In the system according to the invention, the medium used in the medium flow pipe assembly 2 is advantageously refrigerant R410a, but it is obvious that also another suitable refrigerant can be used as the medium.

It should also be mentioned that even if only one pipe is primarily shown in the appended drawings to illustrate the medium flow pipe assembly 2, at least two pipes often have to be laid between different parts in applications in practice to provide a flow pipe assembly in which the medium can circulate. An assembly of three pipes makes it possible to transfer energy in both directions simultaneously, for example for hot gas defrosting.

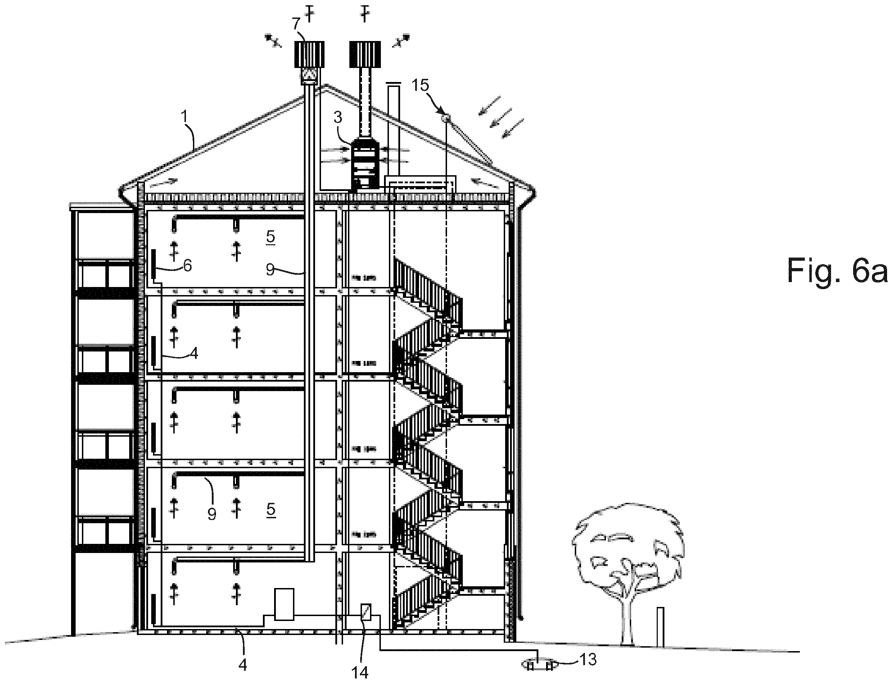

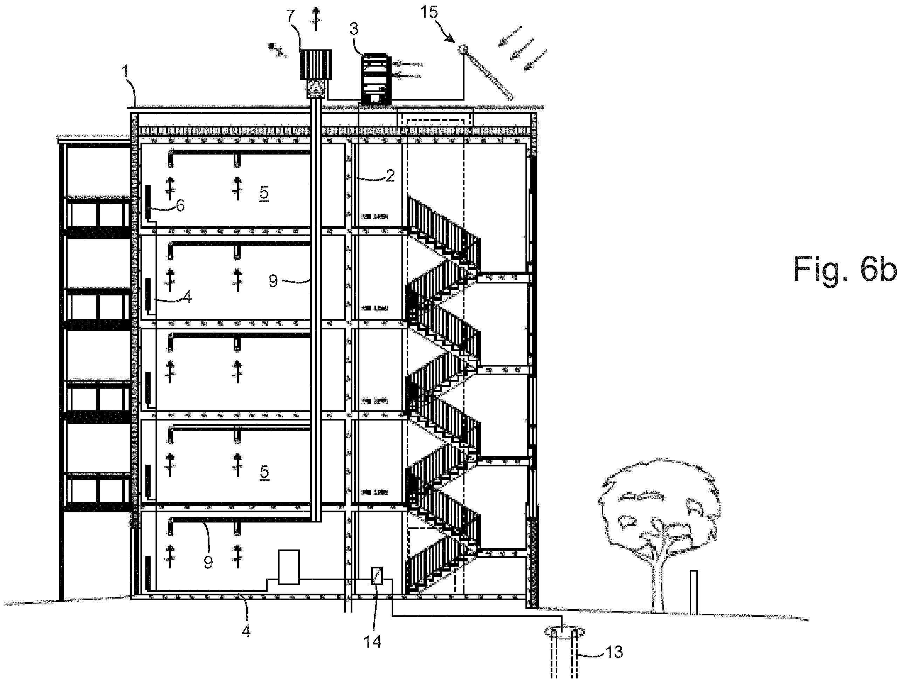

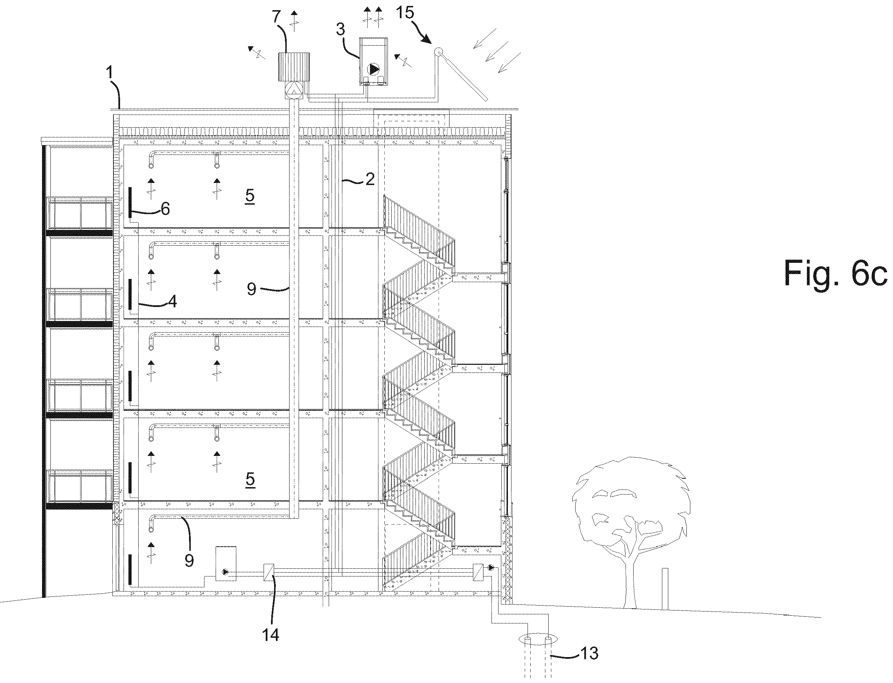

Figures 6a, 6b and 6c show three other systems according to the invention installed in an apartment house. In these embodiments, the heat pump unit 3 can be provided on the roof, in the attic, or outdoors, in which case it is also possible to recover energy from outdoor air. Even down to about -8 degrees, total energy can be recovered more efficiently from outdoor air than by means of a geothermal heat pump. Thus, it may be more profitable to provide a hybrid system comprising a heat pump and an air source heat pump, combining air heating and geothermal heating. In addition to such a hybrid system, it is possible to install recovery of exhaust air, solar heat, process heat, *etc.*

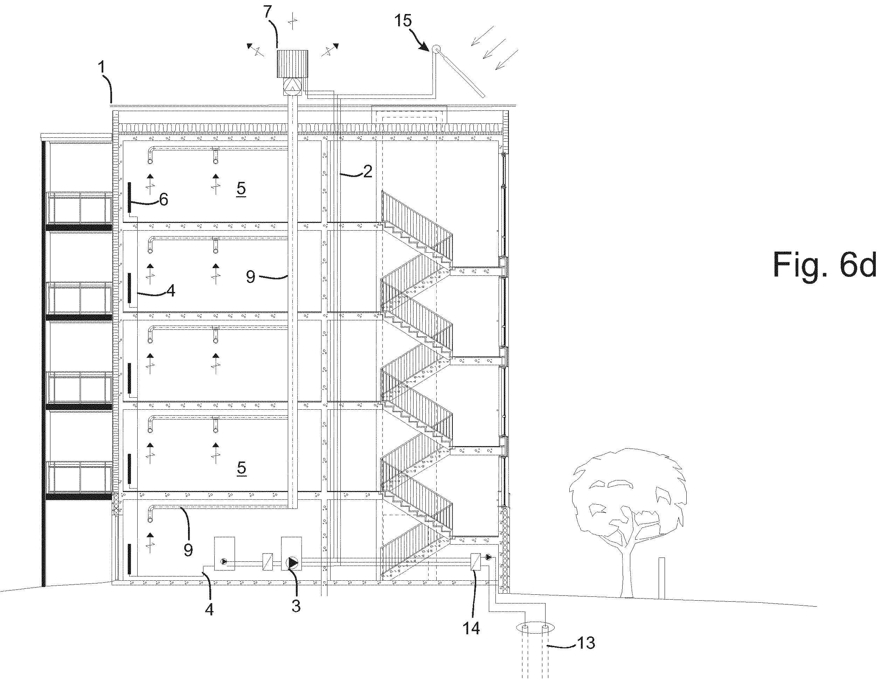

Moreover, Fig. 6d shows a modification of the system of Fig. 6c, in which the heat pump unit 3 is placed in the basement.

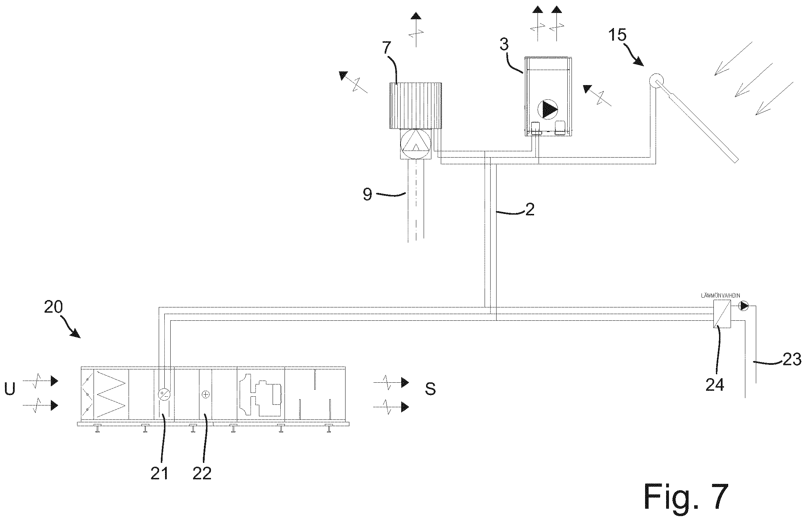

Figure 7 shows yet another system, in which an air circulation/intake machine 20 is connected to the same heat transfer medium circulation as the rest of the system. The air circulation/intake machine 20 comprises, for example, a direct evaporation radiator 21 which utilizes energy contained in heat transfer medium circulating in the heat transfer medium pipe assembly 2 of the system, for the heating of replacement air taken from the outside U, wherein the replacement air is heated to at least some extent before it is conveyed to the interior S of the building. The air circulation/intake machine 20 may also comprise another heat source 22 that takes heating energy from elsewhere than the heat transfer medium. Such a heat source can be, for example, an electric or water-circulated radiator. In the example system of Fig. 7, a connection to a district heating network 23 is also provided, whereby the same heat transfer medium can also be circulated through the heat exchanger 24 of the district heating network. Thus, heat can be recovered even more efficiently from the medium of the district heating network returning to the district heating network, and in this way it is possible to decrease the temperature of the medium of the district heating network returning to the district heating network in comparison with a situation in which this is not utilized.

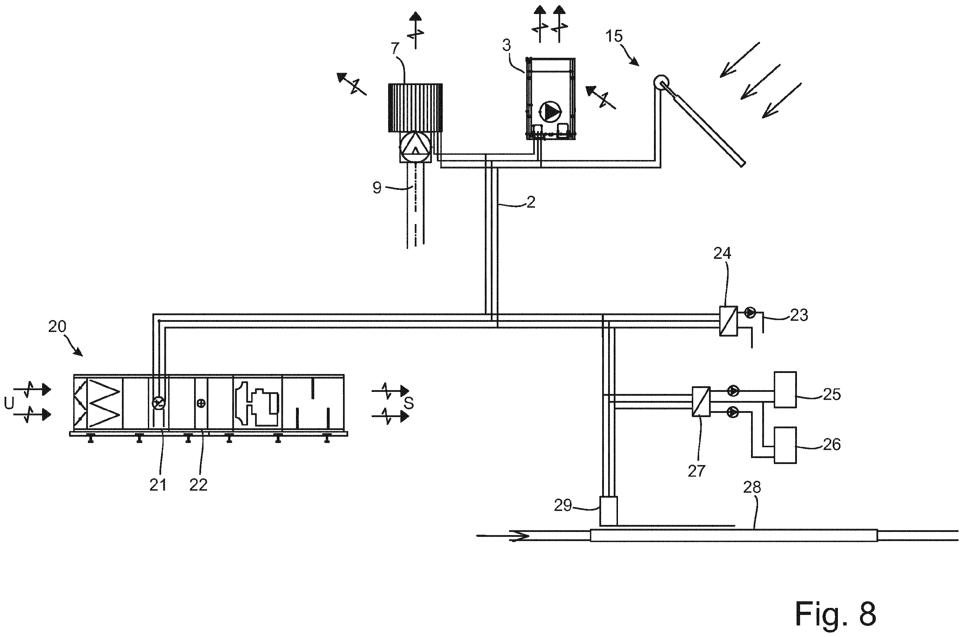

Furthermore, Fig. 8 shows the system of Fig. 7 supplemented with the recovery 28 of waste heat from waste water. The temperature of the waste water coming from the building can be about +20 to +30 degrees, and it can be cooled down to about +2 to +5 degrees by direct evaporation. The waste water contains solid impurities/particles which may clog heat recovery apparatuses of prior art. With direct evaporation utilized in the system according to an embodiment of the present invention, it is possible to achieve more exact controllability and to decrease the temperature of the waste water in the pipework even below 0°C so that the waste water will freeze on the inner surface of the pipework. After a thin layer of ice has accumulated on the inner surface of the pipework, the pipework can be subjected to hot gas defrosting. Thus, the ice and the impurities attached to it will be removed relatively quickly from the pipework, which enhances the cleaning of the pipework. As a result, the ice will detach from the waste water pipe and also carry solid particles with it. A heat recovery pipe assembly to be connected to the waste water pipework consists of one or more pipe assemblies, to which the waste water is conveyed. Two or more elements are provided around the pipe assembly, to be controlled independently. For example, a cleaning function (freezing) is provided on the lower surface of the pipework, and heat recovery 29 is simultaneously provided on the sides and on the top surface.

In other words, heat energy can be recovered from waste water as well as from exhaust air by direct evaporation, with one and the same medium 2.

In the example system of Fig. 8, two accumulators 25, 26 are also provided, one used as a cold water accumulator 25 and the other as a hot water accumulator 26. Thus, the same medium 2 is used for heating the hot water accumulator 26 and for cooling the cold water accumulator 25.

Consequently, the system can be used to implement a method for heating a building, in which heat is recovered from at least a first heat source and a second heat source, wherein the same medium 2 is used for recovering heat from said first heat source and said second heat source, the medium 2 being circulated through at least a first heat recovery apparatus 7 and a second heat recovery apparatus 15.

In an embodiment of the invention, heat is also recovered from a third heat source by using the same medium.

In an embodiment of the invention, the first heat source used is exhaust air from the building 1.

In the invention, exhaust air from the building 1 is conveyed to an apparatus 7 with two or more steps for recovering heat from exhaust air, wherein the temperature of the exhaust air is decreased in each step, and the moisture content of the exhaust air is decreased in at least the first step.

In an embodiment of the invention, the decrease in the moisture content is performed by condensing moisture on the surfaces of lamellae in the heat recovery apparatus 7 and by draining the condensed moisture off the surfaces of the lamellae.

In an embodiment of the invention, refrigerant R410a is used as the medium.

The present invention is not limited to the above-presented embodiments, but it can be modified within the scope of the appended claims.

## Claims

1. Heating system for a building, comprising at least a first heat recovery apparatus (7) for recovering heat from a first heat source, a second heat recovery apparatus (15) for recovering heat from a second heat source for heating the building, and a medium flow pipe assembly (2) arranged in a flow connection with said first heat recovery apparatus (7) and said second heat recovery apparatus (15), for circulating the same medium (2) through at least the first heat recovery apparatus (7) and the second heat recovery apparatus (15), **characterized in that** the first heat recovery apparatus (7) is a multilayer cell assembly comprising at least a first cell (11 a) and a second cell (11 b), wherein operating temperature range of the second cell (11 b) is set below temperature range of the first cell (11 a), and that the first heat recovery apparatus (7) comprises at least two or more steps for recovering heat from exhaust air from the building (1), wherein the first heat recovery apparatus (7) is adapted to decrease temperature of the exhaust air in each step, and to decrease the moisture content of the exhaust air in at least the first step by condensing airborne water on a surface of the first heat recovery apparatus (7).

2. The heating system according to claim 1 for a building, **characterized in that** the heating system for a building further comprises a third heat recovery apparatus (13) for recovering heat from a third heat source, and that said third heat recovery apparatus (13) is arranged in a flow connection with both of said first heat recovery apparatus (7) and said second heat recovery apparatus (15), for utilizing the same medium (2) in the recovery of heat.

3. The heating system according to claim 1 or 2 for a building, **characterized in that** the apparatus (7) for recovering heat from exhaust air comprises a first cell (11 a) with lamellae for condensing moisture in exhaust air, and that said lamellae are arranged to be installed in an angle to the horizontal plane, which angle is greater than 0° but smaller than 90°.

4. The heating system according to claim 1, 2 or 3 for a building, **characterized in that** the apparatus (7) for recovering heat from exhaust air comprises a second cell (11 b) which is arranged to operate at lower exhaust air temperatures than the first cell (11 a).

5. The heating system according to any of the claims 1 to 4 for a building, **characterized in that** the second heat recovery apparatus (15) comprises a solar thermal collector.

6. A method for heating a building, wherein heat is recovered from a first heat source by a first heat recovery apparatus (7) and from a second heat source by a second heat recovery apparatus (15), wherein the method comprises circulating the same medium (2) through at least said first heat recovery apparatus (7) and said second heat recovery apparatus (15) in a medium flow pipe assembly (2) which is arranged in a flow connection with both said first heat recovery apparatus (7) and said second heat recovery apparatus (15), **characterized in** the method further comprises using the first heat recovery apparatus (7), which is a multilayer cell assembly comprising at least a first cell (11a) and a second cell (11b), for recovering heat from exhaust air from the building (1) by using two or more steps, wherein temperature of the exhaust air is decreased in each step, and decreasing moisture content of the exhaust air at least in the first step by condensing airborne water on a surface of the first heat recovery apparatus (7) and further wherein operating temperature range of the second cell (11 b) is set below temperature range of the first cell (11a).

7. The method according to claim 6, **characterized in that** the method further comprises recovering heat by means of the same medium (2) from a third heat source by a third heat recovery apparatus (13).

8. The method according to claim 6 or 7, **characterized in that** for recovering heat from exhaust air, exhaust air is led into the first cell (11 a) with lamellae for condensing moisture from the exhaust air, which lamellae are installed at an angle to the horizontal plane, the angle being greater than 0° but smaller than 90°.

9. The method according to any of the claims 6 to 8, **characterized in that** the method also comprises recovering heat by a solar thermal collector (15).

10. The method according to claim 9, **characterized in that** the method comprises circulating the medium (2) through a collector (18) in the solar thermal collector (15), wherein thermal energy recovered by the solar thermal collector (15) is transferred to the medium (2).

11. The method according to any of the claims 6 to 10, **characterized in that** the method also comprises recovering heat from medium circulating in a district heating network.

12. The method according to any of the claims 6 to 11, **characterized in that** the method also comprises recovering heat from waste water.

## Patentansprüche

1. Heizsystem für ein Gebäude, das mindestens aufweist: eine erste Wärmerückgewinnungsvorrichtung (7) zur Rückgewinnung von Wärme aus einer ersten Wärmequelle, eine zweite Wärmerückgewinnungsvorrichtung (15) zur Rückgewinnung von Wärme aus einer zweiten Wärmequelle zum Heizen des Gebäudes, und eine Anordnung (2) von Medium-Strömungsrohren, die in Strömungsverbindung mit der ersten Wärmerückgewinnungsvorrichtung (7) und der zweiten Wärmerückgewinnungsvorrichtung (15) angeordnet ist, zum Zirkulieren desselben Mediums (2) durch mindestens die erste Wärmerückgewinnungsvorrichtung (7) und die zweite Wärmerückgewinnungsvorrichtung (15), **dadurch gekennzeichnet, dass** die erste Wärmerückgewinnungsvorrichtung (7) eine Mehrschicht-Zellenanordnung ist, die mindestens eine erste Zelle (11a) und eine zweite Zelle (11 b) aufweist, wobei der Betriebstemperaturbereich der zweiten Zelle (11 b) unter dem Temperaturbereich der ersten Zelle (11a) eingestellt ist, und dass die ersten Wärmerückgewinnungsvorrichtung (7) mindestens zwei oder mehr Schritte zur Rückgewinnung von Wärme aus der Abluft aus dem Gebäude (1) aufweist, wobei die erste Wärmerückgewinnungsvorrichtung (7) geeignet ist, die Temperatur der Abluft in jedem Schritt zu verringern und den Feuchtigkeitsgehalt der Abluft in zumindest dem ersten Schritt durch Kondensieren von in der Luft befindlichem Wasser auf einer Oberfläche der ersten Wärmerückgewinnungsvorrichtung (7) zu verringern.

2. Heizsystem gemäß Anspruch 1 für ein Gebäude, **dadurch gekennzeichnet, dass** das Heizsystem für ein Gebäude darüber hinaus eine dritte Wärmerückgewinnungsvorrichtung (13) zur Rückgewinnung von Wärme aus einer dritten Wärmequelle aufweist, und dass die dritte Wärmerückgewinnungsvorrichtung (13) in Strömungsverbindung mit der ersten Wärmerückgewinnungsvorrichtung (7) sowie der zweiten Wärmerückgewinnungsvorrichtung (15) zur Nutzung desselben Mediums (2) bei der Rückgewinnung von Wärme angeordnet ist.

3. Heizsystem gemäß Anspruch 1 oder 2 für ein Gebäude, **dadurch gekennzeichnet, dass** die Vorrichtung (7) zur Rückgewinnung von Wärme aus Abluft eine erste Zelle (11a) mit Lamellen zum Kondensieren von in Abluft befindlicher Feuchtigkeit aufweist, und dass die Lamellen so angeordnet sind, dass sie in einem Winkel zur horizontalen Ebene installiert werden, wobei der Winkel größer als 0°, aber kleiner als 90° ist.

4. Heizsystem gemäß Anspruch 1, 2 oder 3 für ein Gebäude, **dadurch gekennzeichnet, dass** die Vorrichtung (7) zur Rückgewinnung von Wärme aus Abluft eine zweite Zelle (11 b) aufweist, die dazu eingerichtet ist, bei niedrigeren Ablufttemperaturen als die erste Zelle (11a) betrieben zu werden.

5. Heizsystem gemäß einem der Ansprüche 1 bis 4 für ein Gebäude, **dadurch gekennzeichnet, dass** die zweite Wärmerückgewinnungsvorrichtung (15) einen thermischen Sonnenkollektor aufweist.

6. Ein Verfahren zum Heizen eines Gebäudes, wobei Wärme aus einer ersten Wärmequelle mittels einer ersten Wärmerückgewinnungsvorrichtung (7) und aus einer zweiten Wärmequelle mittels einer zweiten Wärmerückgewinnungsvorrichtung (15) gewonnen wird, wobei das Verfahren das Zirkulieren desselben Mediums (2) durch mindestens die erste Wärmerückgewinnungsvorrichtung (7) und die zweite Wärmerückgewinnungsvorrichtung (15) in einer Anordnung (2) von Medium-Strömungsrohren aufweist, die in Strömungsverbindung mit der ersten Wärmerückgewinnungsvorrichtung (7) und der zweiten Wärmerückgewinnungsvorrichtung (15) angeordnet ist, **dadurch gekennzeichnet, dass** das Verfahren darüber hinaus die Verwendung der ersten Wärmerückgewinnungsvorrichtung (7) umfasst, welche eine Mehrschicht-Zellenanordnung ist, die mindestens eine erste Zelle (11a) und eine zweite Zelle (11b) aufweist, zur Rückgewinnung von Wärme aus Abluft aus dem Gebäude (1) unter Verwendung von zwei oder mehr Schritten, wobei die Temperatur der Abluft in jedem Schritt verringert wird, und Verringern des Feuchtigkeitsgehalts der Abluft mindestens in dem ersten Schritt durch Kondensieren von in der Luft befindlichem Wasser auf einer Oberfläche der ersten Wärmerückgewinnungsvorrichtung (7) und darüber hinaus wobei der Betriebstemperaturbereich der zweiten Zelle (11 b) unter dem Temperaturbereich der ersten Zelle (11a) eingestellt ist.

7. Verfahren gemäß Anspruch 6, **dadurch gekennzeichnet, dass** das Verfahren darüber hinaus die Rückgewinnung von Wärme mittels desselben Mediums (2) aus einer dritten Wärmequelle durch eine dritte Wärmerückgewinnungsvorrichtung (13) umfasst.

8. Verfahren gemäß Anspruch 6 oder 7, **dadurch gekennzeichnet, dass** zur Rückgewinnung der Wärme aus Abluft, Abluft in die ersten Zelle (11a) mit Lamellen zum Kondensieren von Feuchtigkeit aus der Abluft geleitet wird, wobei die Lamellen in einem Winkel zur horizontalen Ebene installiert sind, wobei der Winkel größer als 0°, aber kleiner als 90° ist.

9. Verfahren gemäß einem der Ansprüche 6 bis 8, **dadurch gekennzeichnet, dass** das Verfahren auch die Rückgewinnung von Wärme mittels thermischer Sonnenkollektoren (15) umfasst.

10. Verfahren gemäß Anspruch 9, **dadurch gekennzeichnet, dass** das Verfahren das Zirkulieren des Mediums (2) durch einen Kollektor (18) in dem thermischen Sonnenkollektor (15) umfasst, wobei die von dem thermischen Sonnenkollektor (15) gewonnene thermische Energie auf das Medium (2) übertragen wird.

11. Verfahren gemäß einem der Ansprüche 6 bis 10, **dadurch gekennzeichnet, dass** das Verfahren auch die Rückgewinnung von Wärme aus einem in einem Fernwärmenetz zirkulierenden Medium umfasst.

12. Verfahren gemäß einem der Ansprüche 6 bis 11, **dadurch gekennzeichnet, dass** das Verfahren auch die Rückgewinnung von Wärme aus Abwasser umfasst.

## Revendications

1. Système de chauffage pour un bâtiment, comprenant au moins un premier appareil de récupération de chaleur (7) permettant de récupérer de la chaleur en provenance d'une première source de chaleur, un deuxième appareil de récupération de chaleur (15) permettant de récupérer de la chaleur en provenance d'une deuxième source de chaleur permettant de chauffer le bâtiment, et un assemblage de tuyaux d'écoulement de milieu (2) agencé en connexion d'écoulement avec ledit premier appareil de récupération de chaleur (7) et ledit deuxième appareil de récupération de chaleur (15), permettant de faire circuler le même milieu (2) à travers au moins le premier appareil de récupération de chaleur (7) et le deuxième appareil de récupération de chaleur (15), **caractérisé en ce que** le premier appareil de récupération de chaleur (7) est un assemblage de cellules à couches multiples comprenant au moins une première cellule (11a) et une deuxième cellule (11b), dans lequel une plage de températures opérationnelles de la deuxième cellule (11 b) est établie pour être inférieure à une plage de températures de la première cellule (11a), et **en ce que** le premier appareil de récupération de chaleur (7) comprend au moins deux étapes ou plus permettant de récupérer de la chaleur en provenance d'un air d'échappement à partir du bâtiment (1), dans lequel le premier appareil de récupération de chaleur (7) est adapté pour diminuer la température de l'air d'échappement à chaque étape, et pour diminuer la teneur en humidité de l'air d'échappement dans au moins la première étape en condensant de l'eau en suspension dans l'air sur une surface du premier appareil de récupération de chaleur (7).

2. Système de chauffage selon la revendication 1 pour un bâtiment, **caractérisé en ce que** le système de chauffage pour un bâtiment comprend en outre un troisième appareil de récupération de chaleur (13) permettant de récupérer de la chaleur en provenance d'une troisième source de chaleur, et **en ce que** ledit troisième appareil de récupération de chaleur (13) est agencé en connexion d'écoulement avec à la fois ledit premier appareil de récupération de chaleur (7) et ledit deuxième appareil de récupération de chaleur (15), pour utiliser le même milieu (2) dans la récupération de chaleur.

3. Système de chauffage selon la revendication 1 ou 2 pour un bâtiment, **caractérisé en ce que** l'appareil (7) permettant de récupérer de la chaleur en provenance d'un air d'échappement comprend une première cellule (11a) avec des lamelles permettant de condenser l'humidité dans l'air d'échappement, et **en ce que** lesdites lamelles sont agencées pour être installées selon un angle par rapport au plan horizontal, lequel angle est supérieur à 0° mais inférieur à 90°.

4. Système de chauffage selon la revendication 1, 2 ou 3 pour un bâtiment, **caractérisé en ce que** l'appareil (7) permettant de récupérer de la chaleur en provenance d'un air d'échappement comprend une deuxième cellule (11 b) qui est agencée pour fonctionner à des températures d'air d'échappement inférieures à la première cellule (11a).

5. Système de chauffage selon l'une quelconque des revendications 1 à 4 pour un bâtiment, **caractérisé en ce que** le deuxième appareil de récupération de chaleur (15) comprend un collecteur thermique solaire.

6. Procédé permettant de chauffer un bâtiment, dans lequel la chaleur est récupérée à partir d'une première source de chaleur par un premier appareil de récupération de chaleur (7) et à partir d'une deuxième source de chaleur par un deuxième appareil de récupération de chaleur (15), dans lequel le procédé comprend la circulation du même milieu (2) à travers au moins ledit premier appareil de récupération de chaleur (7) et ledit deuxième appareil de récupération de chaleur (15) dans un assemblage de tuyaux d'écoulement de milieu (2) qui est agencé en connexion d'écoulement avec à la fois ledit premier appareil de récupération de chaleur (7) et ledit deuxième appareil de récupération de chaleur (15), **caractérisé en ce que** le procédé comprend en outre l'utilisation du premier appareil de récupération de chaleur (7), qui est un assemblage de cellules à couches multiples comprenant au moins une première cellule (11a) et une deuxième cellule (11b), pour récupérer de la chaleur en provenance d'un air d'échappement à partir du bâtiment (1) en utilisant deux étapes ou plus, dans lequel la température de l'air d'échappement est diminuée à chaque étape, et pour diminuer la teneur en humidité de l'air d'échappement au moins dans la première étape en condensant de l'eau en suspension dans l'air sur une surface du premier appareil de récupération de chaleur (7) et en outre dans lequel une plage de températures opérationnelles de la deuxième cellule (11 b) est établie pour être inférieure à une plage de températures de la première cellule (11a).

7. Procédé selon la revendication 6, **caractérisé en ce que** le procédé comprend en outre la récupération de chaleur au moyen du même milieu (2) à partir d'une troisième source de chaleur par un troisième appareil de récupération de chaleur (13).

8. Procédé selon la revendication 6 ou 7, **caractérisé en ce que** pour récupérer de la chaleur en provenance d'un air d'échappement, l'air d'échappement est conduit dans la première cellule (11a) avec des lamelles permettant de condenser l'humidité en provenance de l'air d'échappement, lesquelles lamelles sont installées selon un angle par rapport au plan horizontal, l'angle étant supérieur à 0° mais inférieur à 90°.

9. Procédé selon l'une quelconque des revendications 6 à 8, **caractérisé en ce que** le procédé comprend également la récupération de chaleur par un collecteur thermique solaire (15).

10. Procédé selon la revendication 9, **caractérisé en ce que** le procédé comprend la circulation du milieu (2) à travers un collecteur (18) dans le collecteur thermique solaire (15), dans lequel l'énergie thermique récupérée par le collecteur thermique solaire (15) est transférée au milieu (2).

11. Procédé selon l'une quelconque des revendications 6 à 10, **caractérisé en ce que** le procédé comprend également la récupération de chaleur en provenance du milieu circulant dans un réseau de chauffage urbain.

12. Procédé selon l'une quelconque des revendications 6 à 11, **caractérisé en ce que** le procédé comprend également la récupération de chaleur en provenance d'eaux usées.
